# EUROPEAN PATENT APPLICATION

(11) **EP 4 300 415 A1**
(43) Date of publication of application: **03.01.2024**
(21) Application number: 22290017.7
(22) Date of filing: 27.06.2022
(51) Int. Cl.: G06T 7/00, G06T 7/10

(54) **ANALYSING A MEDICAL IMAGE**

(71) Applicant: Koninklijke Philips N.V., 5656 AG Eindhoven (NL)
(72) Inventor: Gooßen, André, 5656 AE Eindhoven (NL); Gessert, Nils Thorbens, 5656 AE Eindhoven (NL); Wehle, Simon, 5656 AE Eindhoven (NL); Liu, Jin, 5656 AE Eindhoven (NL); Oliveira, Lucas, 5656 AE Eindhoven (NL); De Craene, Mathieu, 5656 AE Eindhoven (NL); Olivier, Antoine, 5656 AE Eindhoven (NL); Eslami, Parastou, 5656 AE Eindhoven (NL); Prabhu, David, 5656 AE Eindhoven (NL); Waechter-Stehle, Irina, 5656 AE Eindhoven (NL)
(74) Representative: Philips Intellectual Property & Standards

(57) **Abstract**

According to an aspect, there is provided an apparatus for analysing a medical image, the apparatus comprising: a memory comprising instruction data representing a set of instructions; and a processor configured to communicate with the memory and to execute the set of instructions. The set of instructions, when executed by the processor, cause the processor to: i) use a first ML model to predict a label for the image; ii) obtain a saliency map indicating relevancy of different regions of the image to the first ML model when the first ML model predicted the label for the image; iii) obtain a segmentation of the image; and iv) determine an indication of a feature in the image that led to the label being predicted by the first ML model, using the segmentation and the saliency map in combination.

## Description

### FIELD OF THE INVENTION

The disclosure herein relates to analysing a medical image. Particularly, but non-exclusively, embodiments herein relate to explainability of predictions made by AI models when analysing medical images.

### BACKGROUND OF THE INVENTION

Deep-learned models and artificial intelligence are becoming reality in clinical decision support and quantification in many domains, including cardiac ultrasound. Classification models are able to distinguish normal from abnormal heart function, and detect certain pathologies, for example. Regression models can also be employed, for example to determine quantities such as the cardiac ejection fraction.

Many models have accuracies approaching (or even exceeding) that of individual Human experts. However, uptake in clinical settings is limited by the fact that machine learning models can feel like "black boxes" to clinical users, and do not yield explainable results that can easily be verified or challenged.

Machine learning or deep learning-based decision support systems often only output a probability score of a disease without any or very limited local resolution. Therefore, interpretation of the model's output can be challenging and therefore of limited value in practice.

Previously, methods such as the use of saliency maps have been proposed, which indicate how relevant different regions in an input image are to the output label. See paper by: Selvaraju, R, Cogswell, M, Das, A, Vedantam, R, Parikh, D, and Batra, D (2019) entitled: "Grad-CAM: Visual Explanations from Deep Networks via Gradient-Based Localization" International Journal of Computer Vision, 128(2), p.336-359; also the paper by: Zeiler, MD and Fergus, R. (2014), entitled: "Visualizing and understanding convolutional networks" Conference on Computer Vision, p. 818-833,

### SUMMARY OF THE INVENTION

As noted above, saliency maps, whereby parts of an input image are highlighted so as to indicate which parts of the image most strongly contributed to the output score, have been used to try to reduce the black-box nature of machine learning models when performing classification or regression tasks on medical images.

Although in theory, saliency maps can help to visualize regions of an image that most strongly contributed to a model's decision making, in reality, they are usually fuzzy and difficult to interpret. Furthermore, they may be imprecise, for example, indicating large swathes of the image (e.g. at a low level) or they may indicate regions from various different features. Thus, they can be non-trivial to interpret, and this has hampered adoption of such models in clinical practice.

It is thus an object herein to improve upon the explainability of machine learning models that are used in clinical settings to classify or regress medical images. It is further an object of embodiments herein to provide improved medical classification and regression systems for improved uptake amongst clinicians.

According to a first aspect, there is provided a computer implemented method of analysing a medical image. The method comprises: i) using a first machine learning, ML, model to predict a label for the image; ii) obtaining a saliency map indicating relevancy of different regions of the image to the first ML model when the first ML model predicted the label for the image; iii) obtaining a segmentation of the image; and iv) determining an indication of a feature in the image that led to the label being predicted by the first ML model, using the segmentation and the saliency map in combination.

According to a second aspect there is an apparatus for analysing a medical image, the apparatus comprising: a memory comprising instruction data representing a set of instructions; and a processor configured to communicate with the memory and to execute the set of instructions. The set of instructions, when executed by the processor, cause the processor to: i) use a first ML model to predict a label for the image; ii) obtain a saliency map indicating relevancy of different regions of the image to the model when the first ML model predicted the label for the image; iii) obtain a segmentation of the image; and iv) determine an indication of a feature in the image that led to the label being predicted by the first ML model, using the segmentation and the saliency map in combination.

According to a third aspect there is a computer program product comprising a computer readable medium, the computer readable medium having computer readable code embodied therein, the computer readable code being configured such that, on execution by a suitable computer or processor, the computer or processor is caused to perform the method according to the first aspect.

There is thus provided improved systems and methods of analysing a medical image using a machine learning model, whereby the output of a machine learning model is augmented using a combination of a segmentation of the input image, and a saliency map of the input image in order to provide insights into which anatomical features in the image led to the particular label being predicted by the model for that image. This allows the saliency to be given anatomical context, and an anatomical explanation to be provided for why a ML model reached the conclusion it did, further enhancing the trust and adoption of machine learning models in clinical practice.

These and other aspects will be apparent from and elucidated with reference to the embodiment(s) described hereinafter.

### BRIEF DESCRIPTION OF THE DRAWINGS

Example embodiments will now be described, by way of example only, with reference to the following drawings, in which:
Fig. 1 shows an apparatus according to some embodiments herein;
Fig. 2 shows an example method according to some embodiments herein;
Fig. 3 shows an example saliency map according to some embodiments herein;
Fig. 4 shows an example process according to some embodiments herein;
Fig. 5 shows a bulls-eye plot (prior art);
Fig. 6 shows an example process according to some embodiments herein;
Fig. 7 shows an example process according to some embodiments herein; and
Fig. 8 shows an example process according to some embodiments herein.

### DETAILED DESCRIPTION OF EMBODIMENTS

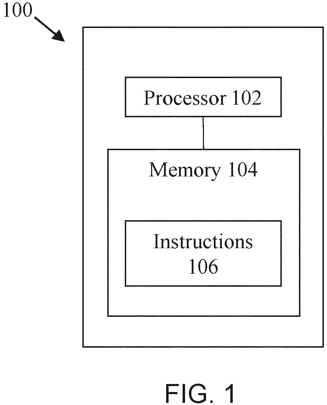

Turning now to Fig. 1, in some embodiments there is an apparatus 100 for use in a computer implemented method of analysing a medical image, according to some embodiments herein. Generally, the apparatus may form part of a computer apparatus or system e.g. such as a laptop, desktop computer or other computing device. In some embodiments, the apparatus 100 may be comprised in a patient monitor. In some embodiments, the apparatus 100 may form part of a distributed computing arrangement or the cloud.

The apparatus comprises a memory 104 comprising instruction data representing a set of instructions 106 and a processor 102 (e.g. processing circuitry or logic) configured to communicate with the memory and to execute the set of instructions. Generally, the set of instructions, when executed by the processor, may cause the processor to perform any of the embodiments of the method 200 as described below.

More specifically, the set of instructions, when executed by the processor, cause the processor to: i) use a first ML model to predict a label for the image; ii) obtain a saliency map indicating relevancy of different regions of the image to the model when the first ML model predicted the label for the image;
iii) obtain a segmentation of the image; and iv) use the segmentation and the saliency map to provide an indication of a feature in the image that led to the label being predicted by the model.

The processor 102 can comprise one or more processors, processing units, multi-core processors or modules that are configured or programmed to control the apparatus 100 in the manner described herein. In particular implementations, the processor 102 can comprise a plurality of software and/or hardware modules that are each configured to perform, or are for performing, individual or multiple steps of the method described herein. The processor 102 can comprise one or more processors, processing units, multi-core processors and/or modules that are configured or programmed to control the apparatus 100 in the manner described herein. In some implementations, for example, the processor 102 may comprise a plurality of (for example, interoperated) processors, processing units, multi-core processors and/or modules configured for distributed processing. It will be appreciated by a person skilled in the art that such processors, processing units, multi-core processors and/or modules may be located in different locations and may perform different steps and/or different parts of a single step of the method described herein.

The memory 104 is configured to store program code that can be executed by the processor 102 to perform the method described herein. Alternatively or in addition, one or more memories 104 may be external to (e.g. separate to or remote from) the apparatus 100. For example, one or more memories 104 may be part of another device. Memory 104 can be used to store the machine learning model, the saliency map, the segmentation and/or any other information or data received, calculated or determined by the processor 102 of the apparatus 100 or from any interfaces, memories or devices that are external to the apparatus 100. The processor 102 may be configured to control the memory 104 to store the machine learning model, the saliency map, the segmentation and/or any other information or data received, calculated or determined by the processor 102 of the apparatus 100.

In some embodiments, the memory 104 may comprise a plurality of sub-memories, each sub-memory being capable of storing a piece of instruction data. For example, at least one sub-memory may store instruction data representing at least one instruction of the set of instructions, while at least one other sub-memory may store instruction data representing at least one other instruction of the set of instructions.

It will be appreciated that Fig. 1 only shows the components required to illustrate this aspect of the disclosure and, in a practical implementation, the apparatus 100 may comprise additional components to those shown. For example, the apparatus 100 may further comprise a display. A display may comprise, for example, a computer screen, and/or a screen on a mobile phone or tablet. The display may be used to display the image, the saliency map, the segmentation and/or the indication output from the method 200 described herein.

In some embodiments, the apparatus 100 may further comprise audio equipment. For example, speakers may be used to provide the indication referred to herein aurally. For example, the apparatus may be configured to convert the text indications described herein into speech.

The apparatus may further comprise a user input device, such as a keyboard, mouse or other input device that enables a user to interact with the apparatus, for example, to provide initial input parameters to be used in the method described herein. The apparatus 100 may comprise a battery or other power supply for powering the apparatus 100 or means for connecting the apparatus 100 to a mains power supply.

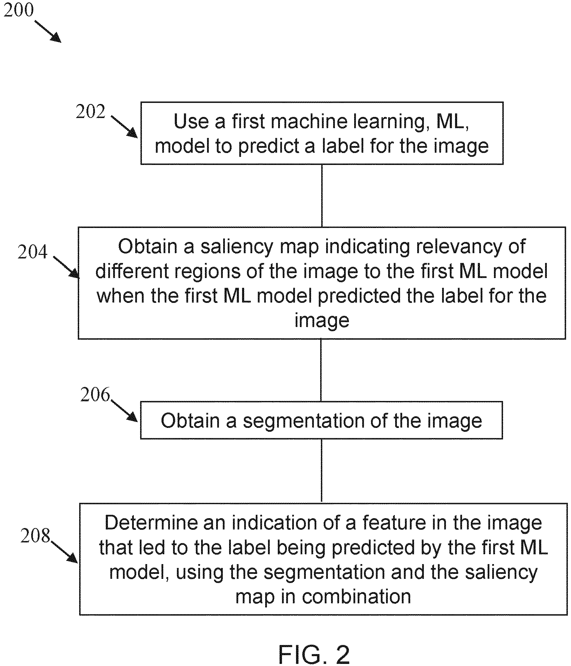

Turning to Fig. 2, there is a computer implemented method 200 for use in analysing a medical image. Embodiments of the method 200 may be performed, for example by an apparatus such as the apparatus 100 described above.

Briefly, in a first step 202, the method 200 comprises: i) using a first machine learning, ML, model to predict a label for the image. In a second step 204 the method comprises ii) obtaining a saliency map indicating relevancy of different regions of the image to the first ML model when the first ML model predicted the label for the image. In a third step 206 the method comprises: iii) obtaining a segmentation of the image; and in a fourth step 208 the method comprises iv) determining (208) an indication of a feature in the image that led to the label being predicted by the first ML model, using the segmentation and the saliency map in combination.

The method 200 thus uses the segmentation data to provide anatomical context to the saliency map. For example, generally, salient areas of the medical image may be matched or linked to anatomical features determined in the segmentation. '

A medical image may comprise any type of image, acquired using any imaging modality. Examples of medical images include, but are not limited to, a computed tomography (CT) image (for example, from a CT scan) such as a C-arm CT image, a spectral CT image or a phase contrast CT Image, an x-ray image (for example, from an x-ray scan), a magnetic resonance (MRI) image (for example, from an MRI scan), an ultrasound (US) image (for example, from an ultrasound scan), fluoroscopy images, nuclear medicine images, or any other medical image.

The medical Image maybe a two-dimensional (2D) image or a three-dimensional (3D) image. In examples where the medical image is 2D, then the medical image may be comprised of pixels; in examples where the medical image is a 3D image, then the medical image may be comprised of voxels.

Analysing a medical image may refer to processing the image, in an automated or semi-automated manner in order to obtain insights into the content of the medical image. For example, to diagnose a condition, disease or other illness.

In step 202 of the method 200 the method comprises using a first machine learning, ML, model to predict a label for the image. The first ML model may be otherwise referred to herein as the "first model". The skilled person will be familiar with ML and models that can be used to predict labels (otherwise known as annotations) for a medical image.

The skilled person will also be familiar with machine learning (ML) and machine learning processes for use in training machine learning models. ML is an approach that allows a programmer to implement a program by finding patterns in data samples. A program or model that is obtained through Machine Learning is called a Machine Learning model. The model can be used in various analysis tasks, for example classification or regression. A dataset of samples used to train the model is known as a training set. Training data comprises training examples (each training example comprising an example input and a corresponding "correct" ground truth output). The model is trained on the training data, using the machine learning process.

A machine learning process comprises a procedure that is run on the training data to create the machine learning model. The machine learning process comprises procedures and/or instructions through which training data, may be processed or used in a training process to generate the machine learning model. The machine learning process learns from the training data. For example, the process may be used to determine how one set of parameters in the training data (input parameters of the model) are correlated with another set of parameters in the training data (output parameters of the model). The machine learning process may be used to fit the model to the training data.

There are many machine learning processes, such as e.g. algorithms for classification, such as k-nearest neighbours, algorithms for regression, such as linear regression or logistic regression, and algorithms for clustering, such as k-means. Machine learning algorithms can be implemented with any one of a range of programming languages.

The model, or machine learning model, may comprise both data and procedures for how to use the data to e.g. make the predictions described herein. The model is what is output from the machine learning (e.g. training) process, e.g. a collection of rules or data processing steps that can be performed on the input data in order to produce the output. As such, the model may comprise e.g. rules, numbers, and any other algorithm-specific data structures or architecture required to e.g. make predictions.

Some examples of machine learning processes and models that may be used herein include, but are not limited to: linear regression processes that produce models comprising a vector of coefficients (data) the values of which are learnt through training; decision tree processes that produce models comprising trees of if/then statements (e.g. rules) comprising learnt values; and neural network models comprising a graph structure with vectors or matrices of weights and biases with specific values, the values of which are learnt using machine learning processes such as backpropagation and gradient descent.

The skilled person will appreciate that training of the first ML model may require many hundreds or thousands of such training examples and that the efficacy and accuracy of the resulting first ML model will depend on the variety, quality and size of the training dataset used. The skilled person will further be familiar with ways in which to train a machine learning model, for example, using open source libraries such as Scikit-learn: *"*Scikit-learn: Machine Learning in Python", Pedregosa et al., JMLR 12, pp. 2825-2830, 2011.

The first ML model may be any type of ML model that can take an image as input. For example, the first ML model may be an Artificial Neural Network, such as a Convolutional Neural Network (CNN). As another example, the first ML model may be an Attention-based model (e.g. Transformers) as described in the paper by Dosovitskiy, Alexey, et al. "An image is worth 16x16 words: Transformers for image recognition at scale." arXiv preprint arXiv:2010.11929 (2020).

In some examples, the first ML model may be any type of ML model for which a saliency map may be obtained. Generally, saliency maps may be produced for fully differentiable models. As such, the first ML model may be fully differentiable (e.g. such as a neural network) so that a saliency map method such as guided backpropagation may be performed.

Although examples have been given above, it will be appreciated that the first ML model herein may generally be any type of ML model that can take an image as input, and for which a saliency map (as described below) may be obtained.

The first ML model may be a clinical decision support model. For example, the first ML model may be for diagnosing a condition, disease or similar. For example, the first ML model may be a model trained to perform a classification task to distinguish anatomical and clinical conditions. As an example, the first ML model may have a binary output. As an example, the first ML model may be trained to output whether the medical image is "normal" or "abnormal", or "Requires Follow-up". For example, the first ML model may be trained to detect whether an image of the heart is normal or abnormal, in order to detect a heart condition; whether an image of a liver is normal or abnormal, or whether an image of the brain is normal or abnormal. It will be appreciated that these are merely examples and that the first ML model may be trained to output many different types of classification labels for images containing many different types of anatomical features and organs.

In some examples, the first ML model may be a regression model. Examples of regression models include but are not limited to models for predicting a continuous score, such as a health score. As another example, the first ML model may output a probability (e.g. score) that the subject of the medical image has a particular condition or disease. It is noted that classification models may also output probability scores. For example, a normal/abnormal classification may be accompanied by e.g. get (0.1, 0.9) indicating that there is a probability of 90% that the image is normal/abnormal.

In some examples, as noted above, the first ML model is a CNN, or transformer. The input is an image, or a sequence of images (e.g. video). If a sequence of images in provided as input, then the sequence may all be the same modality, or there may be different modalities present (US + MR, CT+PET, ...). The output may be a continuous score.

As an example, the output may be the ejection fraction, e.g. a measure indicating how much blood the heart is pumping.

As another example, the output could be a health score provided by clinicians for training. E.g., when annotating the training data set, the clinicians may provide scores from 1 to 10 that indicate severity. The first ML model may thus be trained to predict said score.

As another example, the first ML model may be for detection of regional wall motion abnormality (RWMA) in medical images of the heart. E.g., the first ML model could take as input a medical image of the heart and output the probability that there is RWMA somewhere in the patient's heart.

In some embodiments, the first ML model may have a plurality of outputs. For example, the first ML model may output indications of RWMA for (each of) the anterior, antero-septal, infero-lateral, inferior, inferior-septal, and anterior-septal wall.

As noted above, the second step of the method 200 comprises: ii) obtaining 204 a saliency map indicating relevancy of different regions of the image to the first ML model when the first ML model predicted the label for the image.

A saliency map may indicate, on a pixel-by-pixel (in 2D) or voxel-by-voxel (in 3D) basis, how relevant one or more pixel/voxels were to the first ML model when the first ML model predicted the label for the image. The relevancy may be described compared to other pixels/voxels in the medical image. For example, the most relevant pixels/voxels, that contributed most strongly to the determination of a particular label may be at one end of the scale and the least relevant pixels/voxels, that contributed least strongly to the determination of the particular label may be at the other end of the scale.

In examples where the first ML model is a neural network relevancy may, for example, be an indication of how strongly (or the strength with which) the respective regions of the image activated neurons in the neural network.

In other words, a saliency map may comprise a heat map indicting pixels/voxels or regions of pixels/voxels that contributed most strongly to, or were the deciding factor in, the prediction/output label made by the model.

The output of the saliency map generation (step 204) may be a spatially resolved saliency map corresponding to the input medical image's size. Alternatively, the output of the saliency map generation (step 204) may be a spatially resolved saliency map corresponding to a portion (or region of interest) of the medical image. As noted above, the saliency map's intensity is an indicator of how relevant a certain region is for the machine learning model that was used for generation. High intensities may indicate a higher relevance of a region compared to lower intensity regions.

The saliency map may be in any format. For example, the saliency map may be format as an image e.g. a DICOM, PNG, JPEG or any other image format. More generally, the saliency map may be stored in any format comprising a plurality of image locations and saliency values, e.g. in the manner of a plurality of vectors.

Saliency maps may be generated in various ways. For example, where the first ML model is a neural network, a saliency map may be generated, e.g. by guided back-propagation. Thus, in some embodiments, the saliency map may be obtained (e.g. produced or output) by the first ML model itself.

Saliency map generation is described in more detail in the paper by: Selvaraju, R, Cogswell, M, Das, A, Vedantam, R, Parikh, D, and Batra, D (2019), entitled: "Grad-CAM: Visual Explanations from Deep Networks via Gradient-Based Localization"; International Journal of Computer Vision, 128(2), p.336-359. Another method is described in the paper by Zeiler, MD and Fergus, R. (2014). entitled: "Visualizing and understanding convolutional networks"; European Conference on Computer Vision, p. 818-833.

These are merely examples however, and the skilled person will appreciate that a saliency map as described herein may equally be obtained in any other manner.

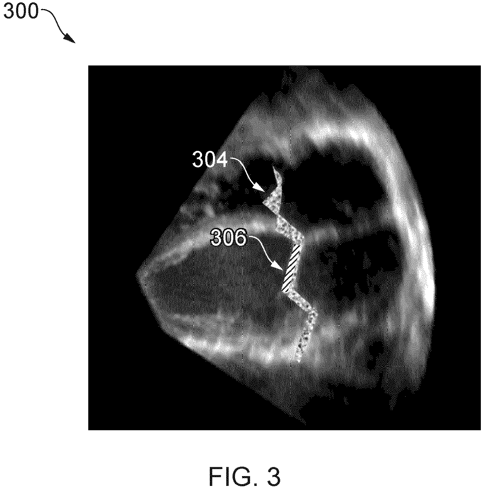

An example saliency map is shown in Fig. 3. In this example, a first ML model was used to classify an ultrasound image of a heart 300. The first ML model classified the heart 300 as "abnormal". Fig 3 shows two regions from a saliency map illustrating a relevant region 304 and a high relevance region 306 that were used by the first ML model to label the image as "abnormal". In this example, the first ML model was a neural network and the saliency map was generated using guided backpropagation.

Turning back to the method 200, in step 206 the method comprises obtaining a segmentation of the image (e.g. the whole or part of the image). The skilled person will be familiar with segmentation (or image segmentation) which involves extracting shape/form information about the objects or shapes captured in an image. Segmentation may be referred to as anatomical regional labelling.

There are various different segmentation methods that can be used. For example, a segmentation may involve converting the image into constituent blocks or "segments" that represent the different features in the image. As another example, segmentation may comprise outlining different structures in an image. As another example, a binary segmentation may involve labelling each pixel as part of a particular anatomical feature (e.g. as part of the heart) or as part of the background (e.g. not part of the heart).

In some methods, image segmentation may comprise fitting a model to one or more features (e.g. features of interest) in an image. One method of image segmentation is Model-Based Segmentation (MBS), whereby a triangulated mesh of a target structure (such as, for example, a heart, brain, lung etc.) is adapted in an iterative fashion to features in an image. Segmentation models typically encode population-based appearance features and shape information. Such information describes permitted shape variations based on real-life shapes of the target structure in members of the population. Shape variations may be encoded, for example, in the form of Eigenmodes which describe the manner in which changes to one part of a model are constrained, or dependent, on the shapes of other parts of a model. Model-based segmentation has been used in various applications to segment one or multiple target organs from medical images, see for example, the paper by Ecabert, O., et al. 2008 entitled "Automatic Model-Based Segmentation of the Heart in CT Images"; IEEE Trans. Med. Imaging 27 (9), 1189-1201.

Another segmentation method uses machine learning (ML) models to convert an image into a plurality of constituent shapes (e.g. block shapes or block volumes), based on similar pixel/voxel values and image gradients. This is described, for example, in the paper by Long et al. entitled: "Fully Convolutional Networks for Semantic Segmentation".

Step 206 of the method 200 may comprise performing any of the segmentation methods described above on the medical image. For example, performing a model based segmentation (MBS) or a deep-learning based segmentation on the medical image.

In examples where an MBS-based method is used, the resulting mesh from the segmentation may be converted to a segmentation map. Such a segmentation map may generally have the same shape as the input image. ML models may directly output a segmentation map. Thus, where ML model segmentation is used, the output of step 206 may be a segmentation map that indicates which region of the image belongs to which anatomical structure. Segmentation maps can be binary or contain multiple different values for different anatomical regions, for example, for different cardiac wall segments.

In step 208 the method comprises iv) determining (208) an indication of a feature in the image that led to the label being predicted by the first ML model, using the segmentation and the saliency map in combination. In other words, the segmentation (e.g. an output of the segmentation process, or segmentation data) and the saliency map are both used to provide an indication of a feature in the image that led to the label being predicted by the first ML model.

As used herein a feature may be an anatomical feature, such as an organ, part of an organ, group of organs, lesion, or any other feature in the medical image.

The indication may be a natural language indication e.g. a text description of the feature(s) that led to the first ML model outputting the label that it did. In other words, the indication may comprise a natural language interpretation of the feature in the image that led to the label being predicted by the first ML model. In some examples, step 208 comprises matching areas of high saliency (e.g. above a threshold saliency) to features in the segmentation, and providing the matched features as the indication in a text string. For example, "The label was determined based on feature X".

Alternatively, or additionally, the indication may comprise a matched feature/segment being highlighted in the medical image, e.g. using shading or colour.

In some examples, the saliency map and segmentation are converted to a natural language description of the most relevant feature(s) using, e.g. a look-up table. As an example, areas of high saliency (e.g. above a threshold saliency) may be matched to points in a MBS mesh or segmentation map. An appropriate natural language interpretation may then be selected, using a look-up table of mesh point/saliency values and associated natural language phrases. Such a look up table may be preconfigured by a clinical expert.

In some embodiments step 208 is performed using ML. For example, step 208 may comprise using a second ML model to predict the indication from the segmentation and the saliency map. The second ML model may be any of the types of ML model described above with respect to the first ML model. The second ML model may take as input the segmentation (or a product of the segmentation, e.g. a segment; parameters from a MBS model; a mesh, or any other output of step 206) and the saliency map.

The second ML model may output the indication. The second ML model may have been trained using training data comprising example segmentations and saliency maps for example medical images and corresponding ground truth or "correct" indications.

In some examples, the second ML model is a natural language ML model that outputs an interpretable result in natural language. For example, the second ML model may be a neural network trained to take the saliency map, the label and the segmentation as input and output a natural language description of the feature in the image that led to the label being predicted by the first ML model. In such an example, the second ML model may have been trained using training data comprising training examples, each training example comprising an example segmentation of an example medical image, an example label for the example medical image and an example saliency map for the example medical image and an example ground truth natural language interpretation of an example feature in the example image.

Note that a subset of inputs may be used as training data, e.g., the data could just encompass saliency maps, segmentations, and corresponding ground-truth natural language interpretations. In this particular example, the trained natural language ML model would be modality-independent and could be used, e.g., for CT interpretation even though the saliency maps and segmentations were obtained from US images. Furthermore, the natural language ML model can be improved and made more robust by including saliency maps produced by different algorithms (e.g. guided backpropagation and GradCAM) in the training set and using multiple different ground-truth natural language phrases.

The natural language ML model could be a (traditional) RNN/LSTM or a combination of a CNN and RNN/LSTM. In such an example, the CNN part of the model would take care of image/segmentation map/saliency map processing and the RNN/LSTM part dynamically generates the natural language phrases. Alternatively, an attention-based method such as transformers or image transformers could be used. The images/segmentation maps/saliency maps can be converted to tokens and fed into a transformer model, as described in Dosovitskiy, Alexey, et al. "An image is worth 16x16 words: Transformers for image recognition at scale.", arXiv preprint arXiv:2010.11929 (2020).).

The skilled person will appreciate that this is merely an example and that the second ML model may be trained to have other inputs and/or outputs to those described above. For example, the second ML model may additionally take as input the medical image itself and/or the label output by the first ML model.

The skilled person will appreciate that training of the second ML model may require many hundreds or thousands of such training examples and that the efficacy and accuracy of the resulting second ML model will depend on the variety, quality and size of the training dataset used. The skilled person will further be familiar with ways in which to train a machine learning model, for example, using open source libraries such as Scikit-learn: *"*Scikit-learn: Machine Learning in Python", Pedregosa et al., JMLR 12, pp. 2825-2830, 2011.

In some embodiments, the method 200 may further comprise determining regions of interest, ROIs, in the saliency map having saliency values above a first saliency threshold. Said ROIs may then be mapped to the segmentation to obtain anatomical labels for the ROIs; and the determined anatomical labels may be provided as further input to the second ML model.

In embodiments where the medical image comprises an image of the heart, an Electrocardiogram, ECG, signal, and/or cardiac phase of the heart in the image may be used to derive further context and improve the indication further. For example, the ECG signal, and/or the cardiac phase of the heart may be provided as further as further input to the second ML model, or as an additional parameter in a look up table or similar.

Thus, in such embodiments, the method 200 may further comprise determining an Electrocardiogram, ECG, signal, and/or cardiac phase of the heart in the image, and providing the ECG signal, and/or the cardiac phase of the heart as further input to the second ML model.

In this way, the natural language text output by the model may be more specific and comprise the cardiac phase and/or a feature of the ECG. This puts the saliency also into temporal correspondence with respect to the heart cycle, e.g. diastole, ED, systole, ES, etc. As an example, an output may be: "The AI classed the image as abnormal based on the mitral valve during systole." In this example the natural language string is based on: output label of the first ML model + matching anatomical point of high saliency from the segmentation + cardiac phase detected in input image.

In other words, the second ML model may be used for natural language generation, using the label from step 202, the saliency map from step 204 and the anatomical labels/segmentation from step 206.

Combining regions of high saliency with the anatomical knowledge of the anatomical models, it is thus possible to derive an understandable representation of the first ML model's output, e.g. using predefined language building blocks (e.g. look up tables) or an advanced generative model, e.g., deep learning.

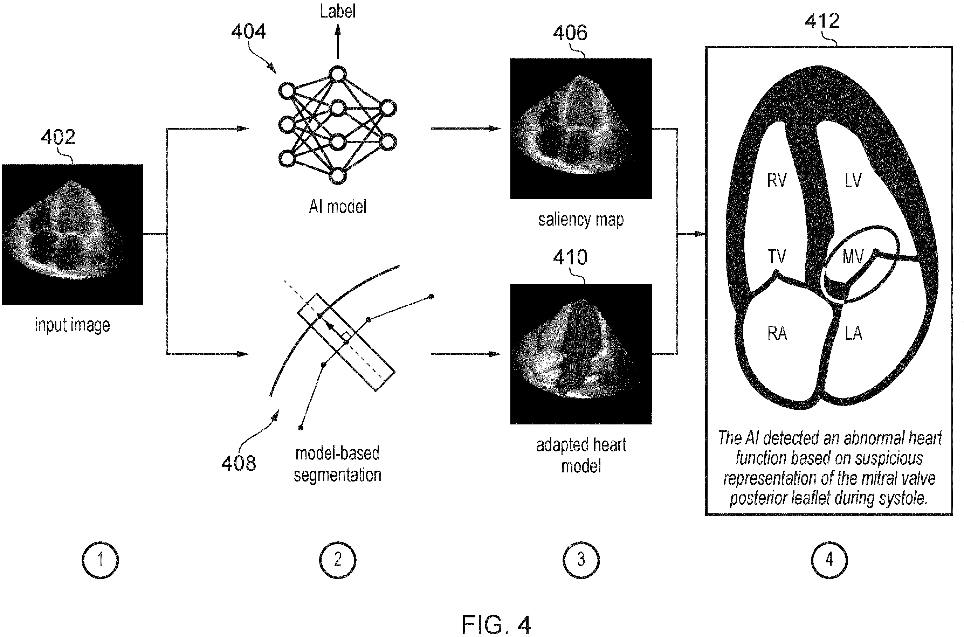

Fig. 4 illustrates an example process according to some embodiments herein. In this example, the first ML model is a binary classification model that takes as input an image of the heart and outputs a label indicating that the heart in the input image is classed as "normal" or "abnormal". In brief, this embodiment comprises: (1) input image, (2) running the first ML model and a MBS of the image individually, (3) saliency map of the first ML models output and segmentation (4) combining saliency map and anatomical labels from the segmentation to generate a tangible result in visual and text form.

In more detail, the following steps are performed:
1 - The first ML model 404 is run on a medical image 402 (e.g. according to step 202 above).
   1.a. the first ML model 404 produces its classification output "Label", e.g., normal or abnormal
   1.b. Second, the model produces a saliency map 406, e.g. using guided backpropagation (e.g. according to step 204 above).
2 - A model-based segmentation (MBS) 408 is performed on the input medical image 402 (e.g. according to step 206).
3 - Saliency regions are then matched to anatomical labels to produce the adapted heart model 410 by:
   a. Detecting regions of high saliency using a local max filter/threshold on the saliency map
   b. Mapping filtered pixels/voxels to closest heart model mesh point
   c. Getting anatomical label(s) from mapped mesh points
4 - The matched anatomical labels are then converted/translated to natural language 412 (according to step 208).

In this embodiment, the detected heart phase or an ECG signal completes the information, such that one can derive a rich natural language translation of a specific result, e.g. "The AI detected an abnormal heart function based on suspicious representation of the LV epicardium during systole."

Turning now to other embodiments, in some embodiments, the indication output in step 208 of the method 200 comprises a bulls-eye plot of an organ in the image.

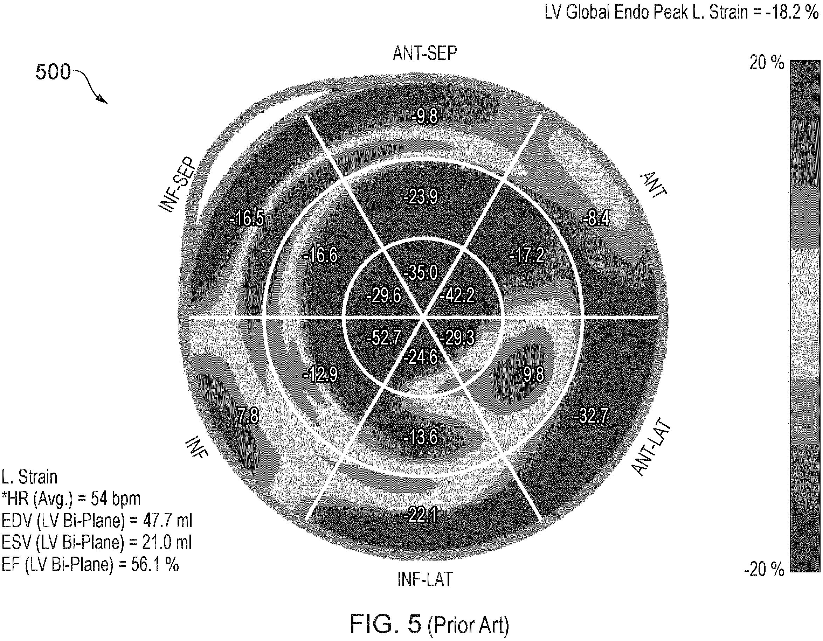

The skilled person will be familiar with Bulls-Eye plots that are used in cardiac ultrasound (US), to visualize properties of anatomical regions of the heart, e.g., for strain measurements. This helps clinicians to get an overview of the different regions of the heart. Fig. 5 illustrates a bulls-eye plot 500 that shows strain of the heart. An example bull's-eye plot showing strain in the heart is illustrated in Fig, 5 from the paper *"*A Case of Myocardial Ischemia Detected by Global Longitudinal Strain Using Intraoperative Speckle-Tracking Echocardiography in a High-Risk Patient Undergoing AbdominalAortic Aneurysm Repair": April 2019; American Journal of Case Reports 20:607-611. DOI:10.12659/AJCR.914858.

In the disclosure herein, it is proposed that the quadrants in the bulls-eye plot are graded according to saliency, of the corresponding regions of the organ in the image, to the first ML model when the first ML model predicted the label for the image.

In a 3D image of a heart, a bulls-eye plot of the saliency may be obtained by projecting values of the (3D) saliency map onto a plane bisecting the organ in the image, and averaging the projected values. In this sense, averaging may comprise computing a mean, median, max, min, mode, or any other statistical combination of the projected values for each point on the plane. In some embodiments a maximum intensity projection is used. This ensures that the most salient parts of the organ are always highlighted in the bulls-eye plot. In this way the 3D saliency can be mapped onto a 2D bulls eye representation of the organ to highlight import anatomical regions for the decision in an interpretable way. Thus simplifying and giving anatomical context to the interpretation of a 3D saliency map.

In some embodiments, a bulls-eye plot is obtained using the segmentation of the image to segment the saliency map. This is used to obtain a 'saliency' segment corresponding to saliency of different parts of the organ, to the first ML model when predicting the respective label. In other words a 3D saliency map may be segmented to produce a segment of the saliency map showing a map of the saliency across a particular organ. For example, the saliency segment may comprise a segment of the saliency map corresponding to the heart. In this way, parts of the saliency map not corresponding to an organ of interest (that is to be mapped to the bulls-eye plot) may be masked out. The saliency segment can then be projected onto a projection plane and the projected saliency segment can be overlayed onto each quadrant of the bulls-eye plot.

Any projection plane, or slice through the organ may be used as the plane in which to project the bulls eye plot onto. For example, the projection plane can be a centre slice through an anatomical region. More advanced 3D to 2D projections could also be used. For example, anatomically plausible planes that are specific to an anatomical region could be selected as a projection plane. For the heart, this could be the apical 2 chamber plane that is commonly used in 2D US acquisitions. The intensity projection itself can also be directly displayed with continuous intensities (higher intensities indicate higher importance) or the display can be simplified by thresholding the saliency values and providing a constant score per region.

The method above may be used when a single label is output by the first ML model, e.g. such as a single classification or egression value that applies to the organ as a whole (e.g. a classification such as "normal" or "abnormal" or a score such as "0.7").

In some embodiments, the first ML model may have multiple outputs. For example, a first ML model for use in diagnosing RWMA of the heart may have outputs indicating RWMA for the anterior, antero-septal, infero-lateral, inferior, inferior-septal, and anterior-septal wall. While this provides some local information, it is still unclear whether the abnormality is present in the basal, mid, or apex region. Note that alternatively to the first ML model having a plurality of outputs, a plurality of first ML models (e.g. a collection of individual models) may be used where each first ML model outputs a probability for a particular wall segment, so one model for anterior, one for inferior, etc.

In such embodiments, the method 200 may comprise repeating steps i) and ii) for each of a plurality of labels for the organ. The step of overlaying the projected saliency segment onto each quadrant of the bulls-eye plot may then comprise combining values of the projected saliency segments of the plurality of labels. The combination may be performed, for example, using a weighted average. For example, the projected saliency segments of the plurality of labels may be combined by applying a weighting to each saliency segment, according to confidences (e.g. probability scores) output by the first ML model in its respective label for the respective segment.

For example, if the first model is for use in diagnosing RWMA of the heart and provides an outputs indicating RWMA for the anterior, antero-septal, infero-lateral, inferior, inferior-septal, and anterior-septal wall of [abnormal, normal, normal, normal, normal, abnormal] respectively with confidences [0.9, 0.8, 0.7, 0.85, 0.6, 0.9] then the saliency values may be weighted by the confidence values when being projected onto the plane. Weighting in this manner normalises the saliency values of the different outputs and makes sure that the most important regions are highlighted for the user.

It is noted that for multi-class outputs (e.g. where there are more than two possible output labels), then steps i)-iv) of the method 200 may be repeated for each class. As such, embodiments herein are not limited to binary classification. In the multi-class scenario one bull's-eye plot can be generated per class. E.g., for RWMA, a bull's-eye plot for hypokinesis, akinesis, and dyskinesis could be generated.

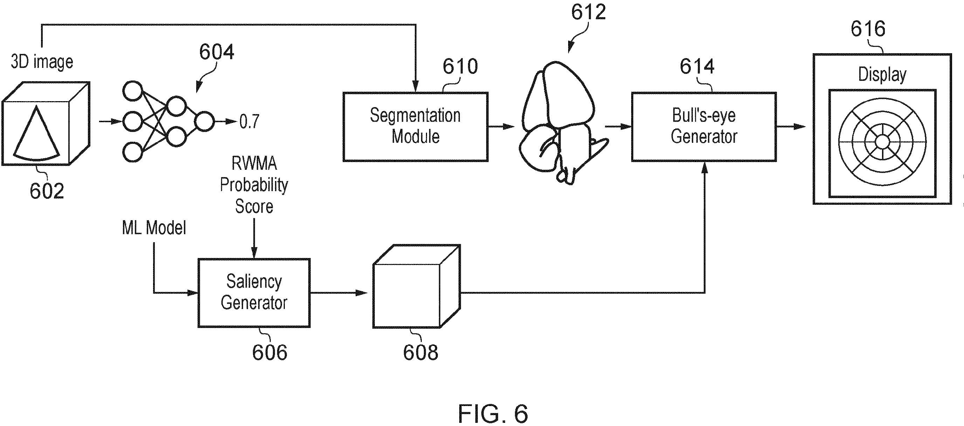

Turning now to Fig. 6, which illustrates a process for bullseye plot generation according to some embodiments herein. In this embodiment, the first ML model 604 is for use in diagnosing RWMA in a medical image 602 of the heart. The first ML model 604 outputs a label indicating whether the heart is normal or abnormal for RWMA. In this embodiment there is a saliency generator module 606 for performing step 204 of the method 200 and generating a saliency map 608 of the medical image as described above. A segmentation module 610 performs step 206 of the method 200 and segments the image 602 to produce a segmentation 612 of the heart in the image. The segmentation 612 is used to produce a saliency segment (e.g. select the portion of the saliency map corresponding to the heart) and this is used by a bulls-eye generation module 614 which projects the saliency segment onto a plane to produce the bulls eye plot 616.

In more detail, in one embodiment, the following steps are performed by the modules illustrated in Fig. 6:
One or multiple machine learning models 604 are trained to predict a disease such as RWMA, e.g. with a single output, or multiple outputs for different locations on the heart.

The saliency generator 606 is set up that can be based on Grad-CAM, or guided-backpropagation as cited above, or any other saliency map generator. The saliency map generator uses the model(s) 604 from Step 1.

Module 610 that produces an anatomical label map from the 3D images is created next. This can be a model-based segmentation method or a deep learning-based segmentation method.

Module 614 uses the saliency map and the anatomical label map to generate the bull's eye map. A possible process for this works as follows:
For each anatomical label:
Segment the saliency map to the current anatomical region
Determine a projection plane from the current anatomical region (e.g. center slice)
Project the segmented saliency map on the projection plane (e.g. maximum intensity projection)
Overlay the projection data on each segment of the bull's-eye plot
Optionally weight the projection data with the decision support's model probability (e.g. if there are multiple local scores corresponding to different outputs of the first model(s))
Optionally threshold the value of each segment
Display module 616 shows the final bull's-eye plot to the user.

The one or machine learning models 604 are applied to the 3D image 602, resulting in one or more probability scores. The saliency generator 606 generates one or multiple saliency maps (dependent on the number of outputs from the models 604, where each saliency map corresponds to one probability score. The segmentation algorithm 610 produces an anatomical label map 612 (e.g. a segmentation) from the current 3D image. The saliency maps are fused with the anatomical label map. The bull's-eye generation algorithm is executed for each anatomical region with its corresponding saliency map. Note that for a single label output, it is the same saliency map for all regions, for a multi-label output model, the saliency map differs per region.

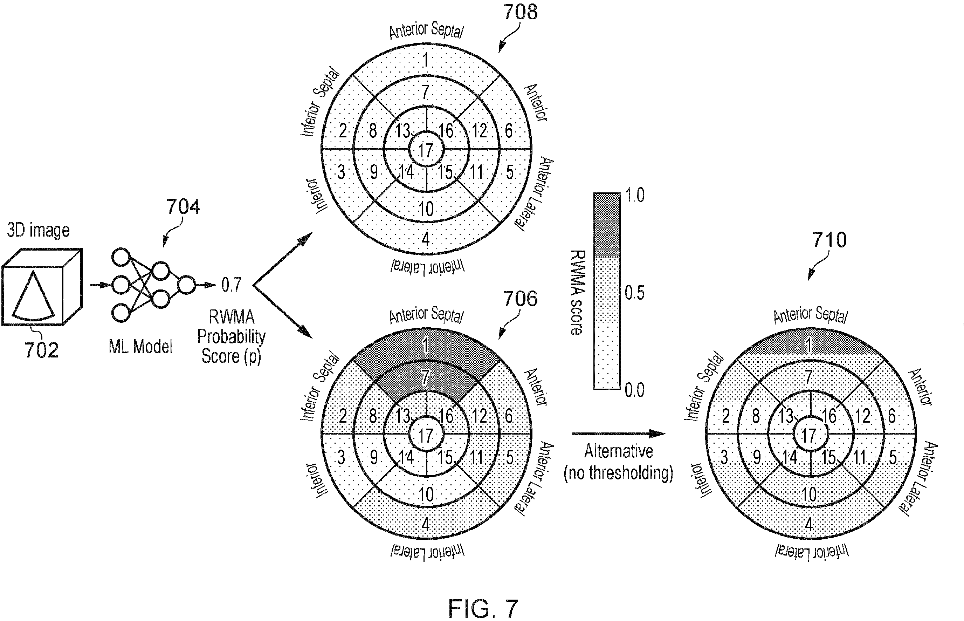

Fig. 7 illustrates an output bullseye plot for a single-label output from a first model 704 operating on input image 702. The first model outputs a single RWMA probability score and a probability (or confidence level) in the score. Bullseye plot 706 shows the output of the method 200 applied to this embodiment, and shows how detailed spatial resolution can be obtained as to the most salient segments to the output label.

Bullseye plot 708 illustrates the baseline that you would get if no saliency-based guidance was used at all. In other words, the intuitive or straight-forward mapping of the first ML model's prediction onto a bull's eye plot (with no spatial resolution as to which quadrant(s) contributed more strongly than others to the predicted label).

Bullseye plot 710 shows an alternative way of displaying, where the saliency values are not thresholded but plotted as continuous values, as described above (see optional thresholding in the end) e.g., the values can vary within one region of the bullseye plot.

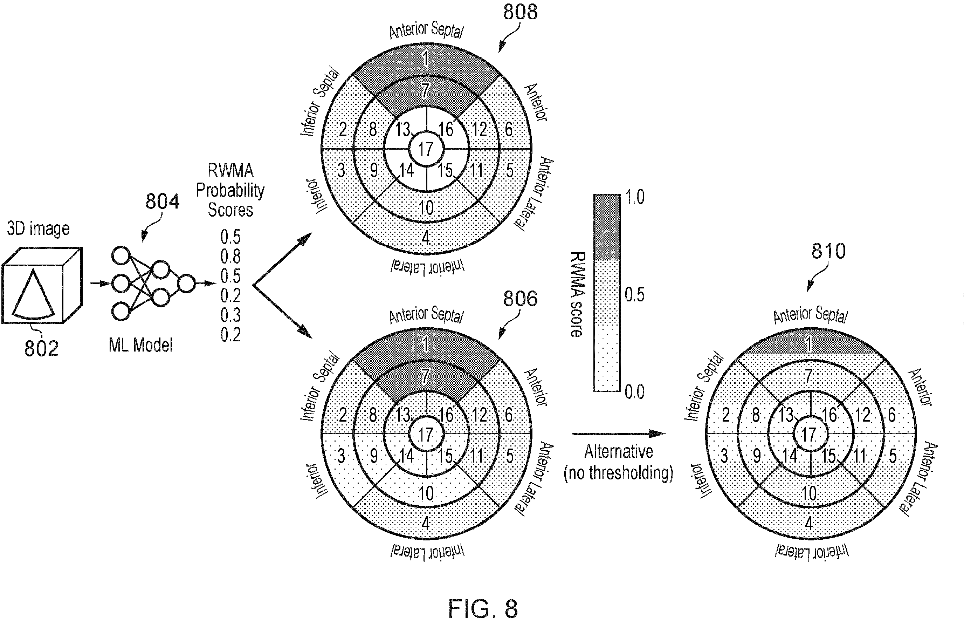

Fig. 8 illustrates an output bullseye plot for a multi-label output from a first model 804 operating on input image 802. The multi-label output may comprise, for example, outputs indicating RWMA for the anterior, antero-septal, infero-lateral, inferior, inferior-septal, and anterior-septal wall and a probability (or confidence level) for each score. Bullseye plot 806 shows the output of the method 200 applied to this embodiment, whereby saliency maps for each output are projected onto a projection plane and a weighted average is taken as the value for each segment of the bullseye plot. Again, the method provides substantial value by providing more detailed local resolution.

Bullseye plot 808 illustrates the baseline that you would get if no saliency-based guidance was used at all. E.g. the straight-forward mapping of the first ML model's predictions to the bulls-eye plot. As can be seen in Fig. 8, using the method herein to obtain plot 806 allows for more detailed information display (more details in sub-regions etc.)

Bullseye plot 810 corresponds to 710 and displays saliency values without thresholding, i.e., with varying importance values within one bullseye segment.

It will be appreciated that although some of the aforementioned embodiments whereby bulls eye plots have been produced have been illustrated with respect to the RWMA of the heart, that this is merely an example and that the same principles apply to other diagnostic characteristics of the heart and/or to other diagnostic characteristics of other organs. Examples of other organs include but are not limited to the brain, the kidney and the liver.

For example, the methods herein may be applied to any localised disease diagnostic model output. Furthermore, other types of bull's-eye plots, e.g., comprising fewer or more segments may be used, to those shown in the Figures.

Turning now to other embodiments, there is provided a computer program product comprising a computer readable medium, the computer readable medium having computer readable code embodied therein, the computer readable code being configured such that, on execution by a suitable computer or processor, the computer or processor is caused to perform the method or methods described herein.

Thus, it will be appreciated that the disclosure also applies to computer programs, particularly computer programs on or in a carrier, adapted to put embodiments into practice. The program may be in the form of a source code, an object code, a code intermediate source and an object code such as in a partially compiled form, or in any other form suitable for use in the implementation of the method according to the embodiments described herein.

It will also be appreciated that such a program may have many different architectural designs. For example, a program code implementing the functionality of the method or system may be sub-divided into one or more sub-routines. Many different ways of distributing the functionality among these sub-routines will be apparent to the skilled person. The sub-routines may be stored together in one executable file to form a self-contained program. Such an executable file may comprise computer-executable instructions, for example, processor instructions and/or interpreter instructions (e.g. Java interpreter instructions). Alternatively, one or more or all of the sub-routines may be stored in at least one external library file and linked with a main program either statically or dynamically, e.g. at run-time. The main program contains at least one call to at least one of the sub-routines. The sub-routines may also comprise function calls to each other.

The carrier of a computer program may be any entity or device capable of carrying the program. For example, the carrier may include a data storage, such as a ROM, for example, a CD ROM or a semiconductor ROM, or a magnetic recording medium, for example, a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or used in the performance of, the relevant method.

Variations to the disclosed embodiments can be understood and effected by those skilled in the art in practicing the principles and techniques described herein, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A computer implemented method (200) of analysing a medical image, the method comprising:
using (202) a first machine learning, ML, model to predict a label for the image;
obtaining (204) a saliency map indicating relevancy of different regions of the image to the first ML model when the first ML model predicted the label for the image;
obtaining (206) a segmentation of the image; and
determining (208) an indication of a feature in the image that led to the label being predicted by the first ML model, using the segmentation and the saliency map in combination.

2. A method as in claim 1 wherein the step of determining (208) an indication of a feature in the image comprises:
using a second ML model to predict the indication from the segmentation and the saliency map.

3. A method as in claim 2 further comprising:
determining regions of interest, ROIs, in the saliency map having saliency values above a first saliency threshold;
mapping the ROIs to the segmentation to obtain anatomical labels for the ROIs; and
providing the anatomical labels as further input to the second ML model.

4. A method as in any one of the preceding claims wherein the image comprises an image of a heart and wherein the method further comprises:
determining an Electrocardiogram, ECG, signal, and/or cardiac phase of the heart in the image; and
providing the ECG signal, and/or the cardiac phase of the heart as further input to the second ML model.

5. A method as in any one of the preceding claims wherein the indication comprises a natural language interpretation of the feature in the image that led to the label being predicted by the first ML model.

6. A method as in claim 5 wherein the second ML model is a natural language ML model that has been trained to take as input the segmentation, the label and the saliency map, and output the natural language interpretation of the feature in the image that led to the label being predicted by the first ML model.

7. A method as in claim 1 wherein the indication comprises a bulls-eye plot of an organ in the image; the quadrants in the bulls-eye plot being graded according to saliency, of the corresponding region of the organ in the image, to the first ML model when the first ML model predicted the label for the image.

8. A method as in claim 7 wherein the bulls-eye plot is obtained by projecting values of the saliency map onto a plane bisecting the organ in the image, and averaging the projected values.

9. A method as in claim 7, wherein the bulls-eye plot is obtained by:
using the segmentation of the image to segment the saliency map, to obtain a saliency segment corresponding to saliency, of different parts of the organ, to the first ML model when predicting the respective label;
projecting the saliency segment onto a projection plane; and
overlaying the projected saliency segment onto each quadrant of the bulls-eye plot.

10. A method as in claim 9 comprising:
repeating steps i) and ii) for each of a plurality of labels for the organ; and wherein the step of overlaying the projected saliency segment onto each quadrant of the bulls-eye plot comprises:
combining values of the projected saliency segments of the plurality of labels.

11. A method as in claim 10 wherein the projected saliency segments of the plurality of labels are combined by applying a weighting to each saliency segment, according to confidences output by the first ML model in its respective label for the respective segment.

12. A method as in any one of the preceding claims wherein the first ML model outputs a multi-class label and the method comprises repeating steps i)-iv) for each class.

13. An apparatus (100) for analysing a medical image, the apparatus comprising:
a memory (104) comprising instruction data representing a set of instructions (106); and
a processor (102) configured to communicate with the memory and to execute the set of instructions, wherein the set of instructions, when executed by the processor, cause the processor to:
use a first ML model to predict a label for the image;
obtain a saliency map indicating relevancy of different regions of the image to the first ML model when the first ML model predicted the label for the image;
obtain a segmentation of the image; and
determine an indication of a feature in the image that led to the label being predicted by the first ML model, using the segmentation and the saliency map in combination.

14. A system as in claim 13 further comprising a display; and
wherein the processor is further caused to send an instruction to the display to cause the display to display the image and the indication.

15. A computer program product comprising a computer readable medium, the computer readable medium having computer readable code embodied therein, the computer readable code being configured such that, on execution by a suitable computer or processor, the computer or processor is caused to perform the method as claimed in any one of claims 1 to 12.
